# EUROPÄISCHE PATENTANMELDUNG

(11) **EP 4 578 589 A1**
(43) Veröffentlichungstag der Anmeldung: **02.07.2025**
(21) Anmeldenummer: 24219564.2
(22) Anmeldetag: 12.12.2024
(51) Int. Cl.: B23K 26/03, B21K 1/56, B23K 26/06, B23K 26/08, B23K 26/352, B23K 26/36

(54) **VERFAHREN ZUR OBERFLÄCHENREINIGUNG EINES STANGENMATERIALS, REINIGUNGSSTATION UND SCHRAUBENHERSTELLUNGSANLAGE MIT EINER SOLCHEN REINIGUNGSSTATION**

(30) Priorität: 29.12.2023 DE 102023136881
(71) Anmelder: SLCR Lasertechnik GMBH, 52379 Langerwehe (DE)
(72) Erfinder: Schulz-Gaus, Olav G., 50126 Bergheim (DE)
(74) Vertreter: Paul & Albrecht Patentanwälte PartG mbB

(57) **Zusammenfassung**

Die vorliegende Erfindung betrifft ein Verfahren zur Oberflächenreinigung eines sich in einer Längsrichtung erstreckenden metallischen Stangenmaterials (2), bei dem das Stangenmaterial (2) in Längsrichtung durch eine Reinigungsstation (1) bewegt wird, dadurch gekennzeichnet, dass in der Reinigungsstation (1) zumindest ein Laserstrahl (9) auf die zu reinigende Oberfläche des Stangenmaterials (2) gerichtet wird, der auf der Oberfläche vorhandene Verunreinigungen abträgt. Ferner betrifft die Erfindung eine Reinigungsstation (1) und eine Schraubenherstellungsanlage (12).

## Beschreibung

Die vorliegende Erfindung betrifft ein Verfahren zur Oberflächenreinigung eines sich in einer Längsrichtung erstreckenden metallischen Stangenmaterials, bei dem das Stangenmaterial in Längsrichtung durch eine Reinigungsstation bewegt wird. Ferner betrifft die Erfindung eine zur Durchführung eines solchen Verfahrens ausgelegte Reinigungsstation sowie eine Schraubenherstellungsanlage mit einer Stangenmaterialablängstation, zumindest einer Stangenmaterialumformstation und einer solchen Reinigungsstation.

Schrauben werden aus metallischem Stangenmaterial mit kreisrundem Querschnitt gefertigt, das normalerweise vorab einer Kaltverformung unterzogen wurde, um eine Erhöhung der Festigkeit herbeizuführen. Vor dem Ablängen des Stangenmaterials und der sich anschließenden Ausbildung der eigentlichen Schraubenform, die meist durch Warm- oder Kaltumformen bewirkt wird, ist es empfehlenswert, auf der Oberfläche des Stangenmaterials vorhandene Verunreinigungen zu entfernen, wie beispielsweise schwarzer Zunder, Oxide, Öle, Fette, Emulsionen, Stearate und dergleichen, die bei der Herstellung des Stangenmaterials auf der Oberfläche verblieben sind. Zur Oberflächenreinigung werden unterschiedliche Verfahren eingesetzt, bei denen die Oberfläche des Stangenmaterials in einer Reinigungsstation chemisch, mittels Ultraschall, unter Einsatz eines Hochdruck-Fluids, mechanisch oder in anderer Form gereinigt wird. In diesem Zusammenhang sei beispielhaft auf die DE 10 2011 017 360 A1 verwiesen, die im einleitenden Teil bekannte Reinigungsverfahren kurz zusammenfasst.

Ausgehend von diesem Stand der Technik ist es eine Aufgabe der vorliegenden Erfindung, ein alternatives Verfahren zur Oberflächenreinigung eines sich in einer Längsrichtung erstreckenden Stangenmaterials zu schaffen, bei dem das Stangenmaterial in Längsrichtung durch eine Reinigungsstation bewegt wird, ebenso wie eine entsprechende Reinigungsstation und eine entsprechende Schraubenherstellungsanlage.

Zur Lösung dieser Aufgabe schafft die vorliegende Erfindung ein Verfahren zur Oberflächenreinigung eines sich in einer Längsrichtung erstreckenden metallischen Stangenmaterials mit insbesondere kreisrundem Querschnitt, bei dem das Stangenmaterial in Längsrichtung durch eine Reinigungsstation bewegt wird, dadurch gekennzeichnet, dass in der Reinigungsstation zumindest ein Laserstrahl auf die zu reinigende Oberfläche des Stangenmaterials gerichtet wird, der auf der Oberfläche vorhandene Verunreinigungen abträgt. Es hat sich herausgestellt, dass die Oberflächenreinigung von Stangenmaterial mittels Laserstrahlung sehr effektiv ist, da im Vergleich zu bekannten Reinigungsverfahren selbst bei sehr hohen Bewegungsgeschwindigkeiten des Stangenmaterials ordnungsgemäße Reinigungsergebnisse erzielt werden. Darüber hinaus ist eine Reinigung von Stangenmaterial mittels Laserstrahlung sehr umweltfreundlich, da keine Reinigungsmittel oder chemische Substanzen zum Einsatz kommen. Zudem benötigt eine Reinigung von Stangenmaterial mittels Laserstrahlung insbesondere gegenüber der typischerweise eingesetzten chemischen Reinigung deutlich weniger Platz, und das Stangenmaterial kann unmittelbar nach seiner Reinigung weiterverarbeitet werden.

Gemäß einer Ausgestaltung des erfindungsgemäßen Verfahrens werden in der Reinigungsstation zumindest drei, bevorzugt zumindest vier Laserstrahlen (9) über den Umfang des Stangenmaterials (2) verteilt auf die zu reinigende Oberfläche gerichtet. Mit zumindest drei solcher Laserstrahlen kann, abhängig vom Durchmesser des Stangenmaterials, der gesamte Umfang des Stangenmaterials abgedeckt werden.

Vorteilhaft wird der zumindest eine Laserstrahl in einer Richtung auf das Stangenmaterial gerichtet wird, die einen entgegen der Bewegungsrichtung des Stangenmaterials weisenden Richtungsvektor aufweist. Bei einer derartigen Ausrichtung des Laserstrahls oder der Laserstrahlen werden besonders gute Reinigungsergebnisse erzielt.

Der Winkel, den der oder die Laserstrahlen und das Stangenmaterial einschließen, liegt bevorzugt im Bereich von 70 bis 90°.

Bevorzugt werden abgetragene Verunreinigungen abgesaugt.

Gemäß einer Ausgestaltung der vorliegenden Erfindung wird der Grad der Verunreinigungen des Stangenmaterials vor der Reinigung erfasst und zumindest ein Parameter der Laserbestrahlung in Abhängigkeit vom erfassten Verunreinigungsgrad geregelt. Auf diese Weise kann ein optimales Reinigungsergebnis erzielt werden.

Bevorzugt wird das Reinigungsergebnis zur Qualitätskontrolle und/oder zur Nachjustierung der Parameter der Laserbestrahlung erfasst.

Gemäß einer Ausgestaltung der vorliegenden Erfindung wird das Verfahren als Bearbeitungsschritt eines Schraubenherstellungsprozesses durchgeführt, insbesondere vor dem Umformen und anschließendem Ablängen des Stangenmaterials.

Ferner schafft die vorliegende Erfindung eine Reinigungsstation mit einer Laserbestrahlungseinrichtung, dadurch gekennzeichnet, dass diese zur Durchführung eines erfindungsgemäßen Verfahrens ausgelegt ist.

Gemäß einer Ausgestaltung der vorliegenden Erfindung weist die Laserbestrahlungseinrichtung eine Bearbeitungskammer mit einem Stangenmaterialeinlass und einem Stangenmaterialauslass auf, wobei innerhalb der Bearbeitungskammer zumindest eine Laseroptik, bevorzugt mehrere Laseroptiken positioniert ist/sind, die derart ausgerichtet werden kann/können, dass sie den gesamten Umfang eines durch die Bearbeitungskammer in Stangenmateriallängsrichtung bewegten Stangenmaterials mit Laserstrahlung beaufschlagen kann/können. Auf diese Weise wird ein einfacher und gut auf unterschiedliche Drahtgeometrien anpassbarer Aufbau erzielt.

Die Laseroptik oder die Laseroptiken kann/können bevorzugt derart bewegt werden, dass zumindest Abstand und Winkel der von ihr/ihnen emittierten Laserstrahlen zum durch die Bearbeitungskammer bewegten Stangenmaterial veränderbar sind.

Als Laserquellen können sowohl gepulste als auch kontinuierlich strahlende Laserquellen zum Einsatz kommen. Die Wellenlänge kann in Abhängigkeit von dem Material und/oder den Abmessungen des Stangenmaterials und/oder von der Art der zu entfernenden Verunreinigungen variieren.

Optional kann die Laserbestrahlungseinrichtung eine Sensoreinrichtung und eine Steuerung aufweist, die derart ausgebildet und eingerichtet sind, dass die Sensoreinrichtung den Grad der Verunreinigungen vor der Reinigung erfasst und die Steuerung zumindest einen Parameter der Laserbestrahlung in Abhängigkeit von dem erfassten Verunreinigungsgrad regelt.

Bevorzugt weist die Laserbestrahlungseinrichtung eine Sensoreinrichtung und eine Steuerung auf, die derart ausgebildet und eingerichtet sind, dass die Sensoreinrichtung das Reinigungsergebnis erfasst, wobei das erfasste Reinigungsergebnis zur Qualitätskontrolle und/oder zur Nachjustierung der Parameter der Laserbestrahlung verwendet wird.

Vorteilhaft weist die Laserbearbeitungseinrichtung eine Absaugeinrichtung auf, um das abgetragene Material ordnungsgemäß vom Bearbeitungsort zu entfernen.

Zudem schafft die vorliegende Erfindung eine Schraubenherstellungsanlage umfassend eine Stangenmaterialumform- und -ablängstation, dadurch gekennzeichnet, dass die Schraubenherstellungsanlage eine erfindungsgemäße Reinigungsstation aufweist, die vor, insbesondere unmittelbar vor der Stangenmaterialumform- und -ablängstation angeordnet ist.

Weitere Merkmale und Vorteile der vorliegenden Erfindung werden anhand der nachfolgenden Beschreibung unter Bezugnahme auf die beiliegende Zeichnung deutlich. Darin ist
Figur 1 eine schematische Seitenansicht einer Reinigungsstation gemäß einer Ausführungsform der vorliegenden Erfindung;
Figur 2 eine schematische Ansicht entlang der Linie II-II in Figur 1;
Figur 3 eine schematische Ansicht, welche die Ausrichtung eines von einer Laseroptik der in Figur 1 dargestellten Reinigungsstation ausgesendeten Laserstrahls zeigt; und
Figur 4 eine schematische Ansicht einer Schraubenherstellungsanlage.

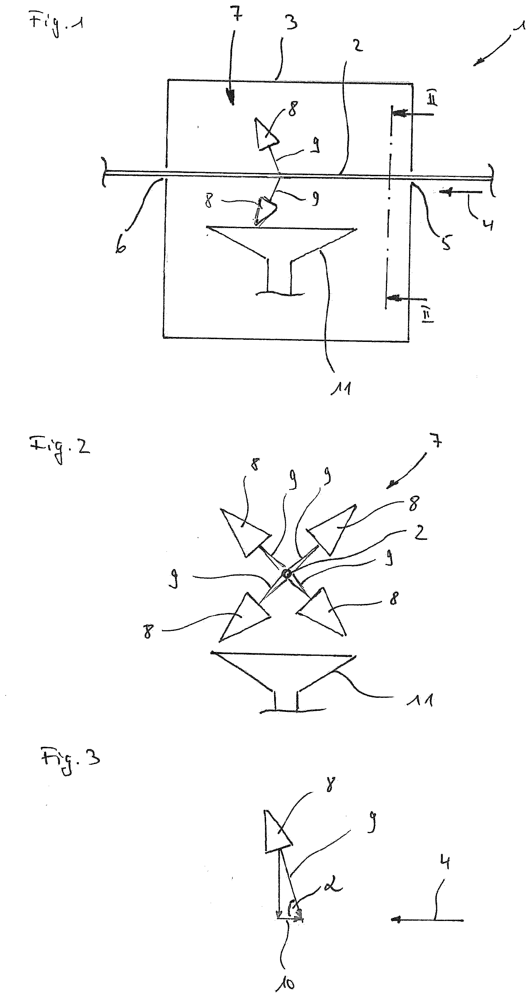

Figur 1 zeigt eine Reinigungsstation 1 gemäß einer Ausführungsform der vorliegenden Erfindung, die zur Oberflächenreinigung eines sich in einer Längsrichtung erstreckenden Stangenmaterials 2 mit vorliegend kreisrundem Querschnitt dient. Das Stangenmaterial 2 kann dabei grundsätzlich jeden bei der Schraubenherstellung verwendeten Durchmesser aufweisen. Die Reinigungsstation 1 umfasst eine Bearbeitungskammer 3, durch die das Stangenmaterial 2 in Richtung des Pfeils 4 von einem Stangenmaterialeinlass 5 zu einem Stangenmaterialauslass 6 der Bearbeitungskammer 3 bewegt wird. Innerhalb der Bearbeitungskammer 3 ist eine Laserbestrahlungseinrichtung 7 angeordnet, die mehrere Laseroptiken 8 aufweist, vorliegend vier Laseroptiken 8. Jede der Laseroptiken 8 ist derart bewegbar, dass zumindest Abstand und Winkel der von ihnen emittierten Laserstrahlen 9 zum durch die Bearbeitungskammer 3 bewegten Stangenmaterial 2 veränderbar sind. Bei der dargestellten Ausführungsform sind die Laseroptiken 8 derart ausgerichtet, dass die von diesen emittierten Laserstrahlen 9 den Umfang des Stangenmaterials 2 innerhalb eines Bearbeitungsbereiches vollständig beaufschlagen. Die Laserstrahlen 9 können am Bearbeitungsort einander teilweise überlappen. Vorteilhaft werden die Laserstrahlen 9 jeweils in einer Richtung auf das Stangenmaterial 2 gerichtet, die, wie es in Figur 3 gezeigt ist, einen entgegen der Bewegungsrichtung 4 des Stangenmaterials 2 weisenden Richtungsvektor 10 aufweisen. Der Winkel α, den die Laserstrahlen 9 und das Stangenmaterial 2 einschließen, liegt bevorzugt im Bereich von 70 bis 90°. Ferner umfasst die Bearbeitungskammer 3 eine Absaugeinrichtung 11, die dazu ausgelegt ist, die mittels Laserstrahlung von der Oberfläche des Stangenmaterials 2 entfernten Verunreinigungen abzusaugen.

Als Laserquellen können sowohl gepulste als auch kontinuierlich strahlende Laserquellen zum Einsatz kommen. Die Wellenlänge kann in Abhängigkeit von dem Material und/oder den Abmessungen des Stangenmaterials und/oder von der Art der zu entfernenden Verunreinigungen variieren.

Optional kann die Laserbestrahlungseinrichtung 7 eine Sensoreinrichtung 14 und eine Steuerung 17 aufweisen, die derart ausgebildet und eingerichtet sind, dass die Sensoreinrichtung 14 den Grad der Verunreinigungen vor der Reinigung erfasst und die Steuerung 17 zumindest einen Parameter der Laserbestrahlung in Abhängigkeit von dem erfassten Verunreinigungsgrad regelt. Alternativ oder zusätzlich können die Sensoreinrichtung 14 und die Steuerung 17 derart ausgebildet und eingerichtet sind, dass die Sensoreinrichtung 14 das Reinigungsergebnis erfasst, wobei das erfasste Reinigungsergebnis zur Qualitätskontrolle und/oder zur Nachjustierung der Parameter der Laserbestrahlung verwendet wird. Die Sensoreinrichtung 14 kann hierzu beispielsweise mit einer Kamera oder mehreren Kameras ausgestattet, welche auf die Oberfläche des Stangenmaterials vor und/oder hinter dem Bearbeitungsort gerichtet sind. Basierend auf den Bilddaten wird dann die Oberflächenbeschaffenheit des Stangenmaterials unter Einsatz einer Bilderkennungssoftware insbesondere in Echtzeit ausgewertet.

Während des Betriebs der Reinigungsstation 1 wird das Stangenmaterial 2 kontinuierlich in Richtung des Pfeils 4 durch die Bearbeitungskammer 3 bewegt und unter Einsatz der Laserbestrahlungseinrichtung 7 gereinigt.

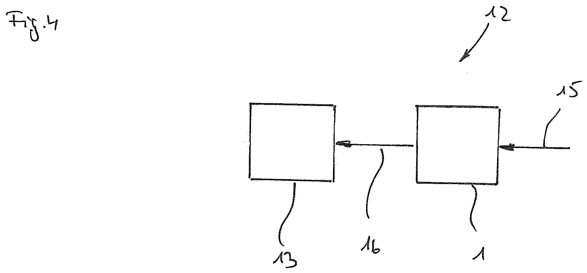

Figur 4 zeigt schematisch eine Schraubenherstellungsanlage 12 umfassend eine erfindungsgemäße Reinigungsstation 1 und eine Stangenmaterialumform- und ablängstation 13, wobei letztere auch in mehrere Einzelstationen unterteilt sein kann. Der Reinigungsstation 1 wird zunächst in Richtung des Pfeils 15 zu reinigendes Stangenmaterial 2 zugeführt. Das oberflächengereinigte Stangenmaterial 2 verlässt dann die Reinigungsstation 1 in Richtung des Pfeils 16 und wird daraufhin der Stangenmaterialumform- und ablängstation 13 zugeführt. In dieser wird dem Stangenmaterial 2 mittels Warm- oder Kaltumformung die gewünschte Form verliehen und abgelängt. Alternativ oder zusätzlich kann die Stangenmaterialumform- und ablängstation 13 aber auch eine Gewindeschneideinrichtung aufweisen.

Abschließend sei darauf hingewiesen, dass die zuvor beschriebenen Ausführungsformen nur als Beispiel dienen und nicht als einschränkend zu verstehen sind. Vielmehr sind Änderungen und/oder Modifikationen möglich, ohne den durch die beiliegenden Ansprüche definierten Schutzbereich zu verlassen.

### BEZUGSZIFFERNLISTE

- 1: Reinigungsstation
- 2: Stangenmaterial
- 3: Bearbeitungskammer
- 4: Pfeil
- 5: Stangenmaterialeinlass
- 6: Stangenmaterialauslass
- 7: Laserbestrahlungseinrichtung
- 8: Laseroptik
- 9: Laserstrahl
- 10: Richtungsvektor
- 11: Absaugeinrichtung
- 12: Schraubenherstellungsanlage
- 13: Stangenmaterialumform- und ablängstation
- 14: Sensoreinrichtung
- 15: Pfeil
- 16: Pfeil
- 17: Steuerung

## Patentansprüche

1. Verfahren zur Oberflächenreinigung eines sich in einer Längsrichtung erstreckenden metallischen Stangenmaterials (2), bei dem das Stangenmaterial (2) in Längsrichtung durch eine Reinigungsstation (1) bewegt wird, **dadurch gekennzeichnet, dass** in der Reinigungsstation (1) zumindest ein Laserstrahl (9) auf die zu reinigende Oberfläche des Stangenmaterials (2) gerichtet wird, der auf der Oberfläche vorhandene Verunreinigungen abträgt.

2. Verfahren nach Anspruch 1, **dadurch gekennzeichnet, dass** in der Reinigungsstation (1) zumindest drei, bevorzugt zumindest vier Laserstrahlen (9) über den Umfang des Stangenmaterials (2) verteilt auf die zu reinigende Oberfläche gerichtet werden.

3. Verfahren nach Anspruch 1 oder 2, **dadurch gekennzeichnet, dass** der zumindest eine Laserstrahl (9) in einer Richtung auf das Stangenmaterial (2) gerichtet wird, die einen entgegen der Bewegungsrichtung des Stangenmaterials (2) weisenden Richtungsvektor (10) aufweist.

4. Verfahren nach einem der vorhergehenden Ansprüche, **dadurch gekennzeichnet, dass** der Winkel (α ), den der oder die Laserstrahlen (9) und das Stangenmaterial (2) einschließen, im Bereich von 70 bis 90° liegt.

5. Verfahren nach einem der vorhergehenden Ansprüche, **dadurch gekennzeichnet, dass** abgetragene Verunreinigungen abgesaugt werden.

6. Verfahren nach einem der vorhergehenden Ansprüche, **dadurch gekennzeichnet, dass** der Grad der Verunreinigungen des Stangenmaterials (2) vor der Reinigung erfasst und die Parameter der Laserbestrahlung in Abhängigkeit vom erfassten Verunreinigungsgrad geregelt werden, und/oder das Reinigungsergebnis zur Qualitätskontrolle und/oder zur Nachjustierung der Parameter der Laserbestrahlung erfasst wird.

7. Verfahren nach einem der vorhergehenden Ansprüche, **dadurch gekennzeichnet, dass** dieses als Bearbeitungsschritt eines Schraubenherstellungsprozesses durchgeführt wird, wobei das Verfahren insbesondere vor einem Ablängen des Stangenmaterials (2) durchgeführt wird.

8. Reinigungsstation (1) mit einer Laserbestrahlungseinrichtung (7), **dadurch gekennzeichnet, dass** diese zur Durchführung eines Verfahrens nach einem der vorhergehenden Ansprüche ausgelegt ist.

9. Reinigungsstation (1) nach Anspruch 8, **dadurch gekennzeichnet, dass** die Laserbestrahlungseinrichtung (7) eine Bearbeitungskammer (3) mit einem Stangenmaterialeinlass (5) und einem Stangenmaterialauslass (6) aufweist, wobei innerhalb der Bearbeitungskammer (3) zumindest eine Laseroptik (8), bevorzugt mehrere Laseroptiken (8) positioniert sind, die derart ausgerichtet werden kann/können, dass sie den gesamten Umfang eines durch die Bearbeitungskammer (3) in Stangenmateriallängsrichtung bewegten Stangenmaterials (2) mit Laserstrahlung beaufschlagen kann/können.

10. Reinigungsstation (1) nach Anspruch 9, **dadurch gekennzeichnet, dass** die Laseroptik (8) oder die Laseroptiken (8) derart bewegt werden kann/können, dass zumindest Abstand und Winkel der von ihr/ihnen emittierten Laserstrahlen (9) zum durch die Bearbeitungskammer (3) bewegten Stangenmaterial (2) veränderbar sind.

11. Reinigungsstation (1) nach einem der Ansprüche 8 bis 10, **dadurch gekennzeichnet, dass** die Laserbestrahlungseinrichtung (7) eine Absaugeinrichtung (11) aufweist.

12. Reinigungsstation (1) nach einem der Ansprüche 8 bis 11, **dadurch gekennzeichnet, dass** die Laserbestrahlungseinrichtung (7) eine Sensoreinrichtung (14) und eine Steuerung (17) aufweist, die derart ausgebildet und eingerichtet sind, dass die Sensoreinrichtung (14) den Grad der Verunreinigungen vor der Reinigung erfasst und die Steuerung (17) zumindest einen Parameter der Laserbestrahlung in Abhängigkeit von dem erfassten Verunreinigungsgrad regelt.

13. Reinigungsstation (1) nach einem der Ansprüche 8 bis 12, **dadurch gekennzeichnet, dass** die Laserbestrahlungseinrichtung (7) eine Sensoreinrichtung (14) und eine Steuerung (17) aufweist, die derart ausgebildet und eingerichtet sind, dass die Sensoreinrichtung (14) das Reinigungsergebnis erfasst, wobei das erfasste Reinigungsergebnis zur Qualitätskontrolle und/oder zur Nachjustierung der Parameter der Laserbestrahlung verwendet wird.

14. Schraubenherstellungsanlage (12) umfassend eine Stangenmaterialumform- und ablängstation (13), **dadurch gekennzeichnet, dass** die Schraubenherstellungsanlage (12) eine Reinigungsstation (1) nach einem der Ansprüche 8 bis 13 aufweist, die vor, bevorzugt unmittelbar vor der Stangenmaterialumform- und ablängstation (13) angeordnet ist.
